Europäisches Patentamt

European Patent Office

Office européen des brevets

(19)

(11) Veröffentlichungsnummer: 0 379 152
A2

(12) EUROPÄISCHE PATENTANMELDUNG

(21) Anmeldenummer: 90100846.6

(51) Int. Cl.5: B60S 1/18

(22) Anmeldetag: 16.01.90

(30) Priorität: 19.01.89 DE 3901423

(43) Veröffentlichungstag der Anmeldung:
25.07.90 Patentblatt 90/30

(84) Benannte Vertragsstaaten:
DE FR GB IT SE

(71) Anmelder: Bayerische Motoren Werke
Aktiengesellschaft
Patentabteilung AJ-30 Postfach 40 02 40
Petuelring 130
D-8000 München 40(DE)

(72) Erfinder: Güntzel, Detlef
Gardolostrasse 16
D-8056 Neufahrn(DE)
Erfinder: Riedl, Harry
Stiftsbogen 81
D-8000 München 70(DE)

(54) Antriebsvorrichtung für Scheibenwischer von Fahrzeugen.

(57) Eine Antriebsvorrichtung für Scheibenwischer von Fahrzeugen weist eine Kurbel aus zwei gelenkig miteinander verbundenen Kurbelteilen (3, 4) auf. Das erste Kurbelteil (3) ist an einer Abtriebswelle (1) befestigt und das zweite Kurbelteil (4) an einer Antriebsstange (7) angelenkt, welche den Scheibenwischer pendelnd antreibt. Ferner ist eine Führung zum radialen Auslenken eines an dem zweiten Kurbelteil (3, 4) angeordneten Führungsbolzens bei Umkehrung der Drehrichtung der Kurbel zum Überführen des Wischblattes (12) in eine außerhalb des Wischfeldes (24) liegende Parkstellung vorgesehen. Diese Führung wird durch eine konzentrisch um die Drehachse (1) der Kurbel (3, 4) angeordnete Kreisbahn (15) gebildet, welche in dem Kreissektor (23) eine taschenförmige Aussparung (16) aufweist, welchen der Führungsbolzen (14) während des Wischvorgangs beim Zurückbewegen des Wischblattes (12) in die Bereitschaftsstellung durchläuft. Ferner ist ein Anschlag (13) vorgesehen, über den sich das zweite Kurbelteil (4) am ersten Kurbelteil (3) bei Durchlauf des Führungsbolzens (14) durch den Kreissektor (23) abstützt.

FIG. 1

Die Erfindung bezieht sich auf eine Antriebsvorrichtung für Scheibenwischer von Fahrzeugen nach dem Oberbegriff des Anspruchs 1.

Eine derartige Antriebsvorrichtung mit einer erweiterten, also außerhalb des Wischfeldes liegenden Parkstellung des Wischblatts geht aus der DE-OS 31 21 626 hervor. Die bekannte Vorrichtung weist neben dem ersten und dem zweiten Kurbelteil noch weitere bewegliche Teile auf, und zwar ein an der Antriebswelle drehbar gelagertes Bauteil mit einer Führungskulisse für den Führungsbolzen sowie eine an diesem Bauteil drehbar gelagerte Klinke mit einem Rastzahn zum Eingriff in eine konsolefeste, der Abtriebswelle benachbarte Rastaufnahme.

Die zahlreichen beweglichen Teile der bekannten Vorrichtung erfordern einen entsprechend hohen Fertigungsaufwand und beeinträchtigen durch Verschleiß, Festfressen usw. die Zuverlässigkeit der bekannten Vorrichtung. Auch kann der Rastzahn nur verhältnismäßig geringe Kräfte aufnehmen, so daß beispielsweise mit einem Abbrechen des Rastzahnes zu rechnen ist, wenn der Motor, der die Kurbel antreibt, fehlerhaft gesteuert wird.

Aufgabe der Erfindung ist es daher, eine Antriebsvorrichtung für einen Scheibenwischer mit einer erweiterten Parkstellung bereitzustellen, welche einen relativ geringen Herstellungsaufwand erfordert und zuverlässig funktioniert.

Dies wird erfindungsgemäß durch die im Anspruch 1 gekennzeichnete Antriebsvorrichtung erreicht. In den Unteransprüchen sind vorteilhafte Ausgestaltungen der erfindungsgemäßen Antriebsvorrichtung wiedergegeben.

Die erfindungsgemäße Antriebsvorrichtung weist, um die außerhalb des Wischfeldes liegende Parkstellung zu erreichen, also außer der zweigeteilten Kurbel, keine zusätzlichen beweglichen Teile auf. Der Herstellungsaufwand ist dadurch entsprechend gering und die Robustheit und Zuverlässigkeit der Antriebsvorrichtung entspricht praktisch der eines normalen Scheibenwischers ohne erweiterter Parkstellung.

Nachstehend ist die Erfindung anhand der Zeichnung näher erläutert. Darin zeigen jeweils schematisch:

Fig. 1 bis 3 jeweils eine Draufsicht auf eine Ausführungsform der erfindungsgemäßen Antriebsvorrichtung während verschiedener Phasen des Wischzykluses;

Fig. 4 eine den Fig. 1 bis 3 entsprechende Draufsicht, jedoch während der erweiterten Parkstellung des Wischblatts; und

Fig. 5 eine perspektivische Teilansicht der Kurbel der Ausführungsform nach Fig. 1 bis 4.

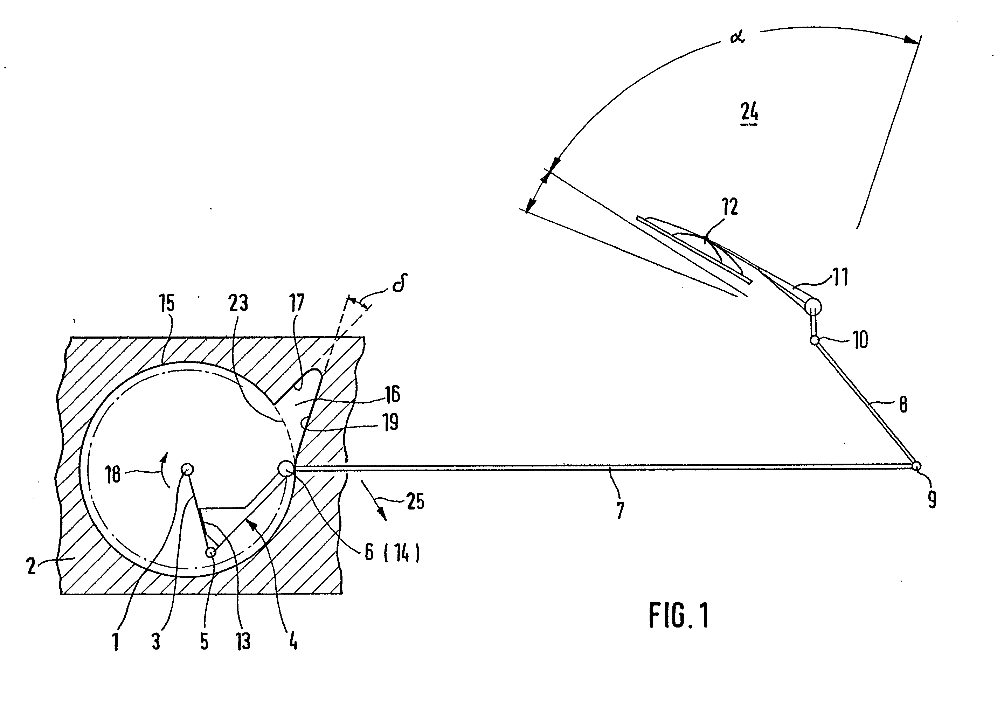

Die Antriebsvorrichtung weist eine Abtriebswelle 1 auf, die durch den elektrischen Antriebsmotor einer Antriebseinheit angetrieben wird, wobei der Antriebsmotor und die Antriebseinheit an der in Fig. 1 bis 4 nicht sichtbaren anderen Seite einer Konsole 2 befestigt sind.

An der Abtriebswelle 1 ist eine Kurbel befestigt, die aus zwei Teilen 3 und 4 besteht, die um eine zur Abtriebswelle oder Drehachse 1 der Kurbel parallel verlaufende Achse 5 drehbar miteinander verbunden sind.

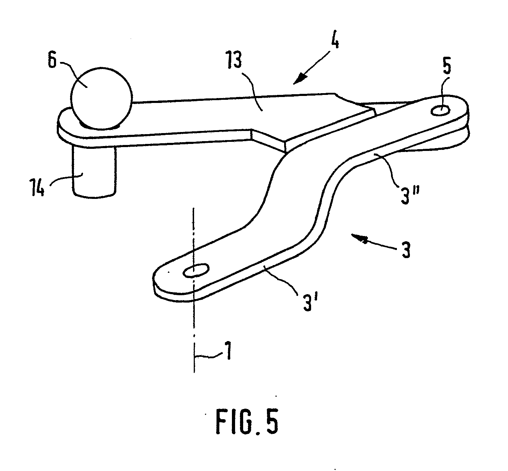

Die Abtriebswelle 1 ist dabei am ersten Kurbelteil 3 befestigt. An seinem von der Drehachse 5 entfernten Ende ist am zweiten Kurbelteil 4 ein Kurbelzapfen 6 auf der von der Konsole 2 abgewandten Seite angeordnet, der als Kugelkopf ausgebildet ist (Fig. 5). An dem Kurbelzapfen 6 ist eine Antriebsstange 7 gelenkig angeordnet.

An ihrem von dem Kurbelzapfen 6 abgewandten Ende ist die Antriebsstange 7 mit dem einen Ende einer Schwinge 8 über ein Gelenk 9 verbunden, deren anderes Ende an der Wischerwelle 10 befestigt ist. An der Wischerwelle 10 ist ferner ein Wischerarm 11 befestigt, der an seinem von der Wischerwelle 10 abgewandten Ende ein Wischblatt 12 trägt.

Das erste Kurbelteil 3 ist gemäß Fig. 5 an seinem radial inneren Abschnitt 3′ zur Konsole 2 hin gekröpft. Vom zweiten Kurbelteil 4 erstreckt sich zum von der Konsole 2 weggekröpften radial äußeren Abschnitt 3″ des ersten Kurbelteils 3 ein plattenförmiger Abschnitt 13, der einen Anschlag bildet.

Weiterhin ist an der der Konsole 2 zugewandten Seite des zweiten Kurbelteils 4 ein Führungsbolzen 14 vorgesehen, an dem der Kurbelzapfen 6 befestigt ist.

Um die Abtriebswelle oder Drehachse 1 der Kurbel 3, 4 verläuft eine Kreisbahn 15, die durch die Innenwandung einer kreisförmigen Ausnehmung in der Konsole 2 gebildet wird. Sie kann z. B. auch in einem plattenförmigen Bauteil auf der Konsole 2 vorgesehen sein.

Die Kreisbahn 15, die die Führungsbahn für den Führungsbolzen 14 darstellt, weist im Bereich des Kreissektors 23 eine Aussparung 16 auf, welche taschenförmig ausgebildet ist, und zwar mit einer sich im wesentlichen radial erstreckenden Flanke 17 sowie mit einer im wesentlichen tangential erstreckenden Flanke 19, die mit der radial erstreckenden Flanke 17 einen Winkel von beispielsweise 20 bis 50° einschließt, wobei die radiale Flanke 17 in der durch den Pfeil 18 dargestellten Drehrichtung des Führungsbolzens 14 während des Wischvorgangs am Anfang und die tangentiale Flanke 19 am Ende des Kreissektors 23 angeordnet ist.

Wenn der plattenförmige Abschnitt oder Anschlag 13 des zweiten Kurbelteils 4 am ersten Kurbelteil 3 anliegt, ist der Abstand zwischen der Abtriebswelle oder Drehachse 1 der Kurbel 3, 4 und der der Kreisbahn 15 zugewandten Seite des Fuhrungsbolzens 14 nur geringfügig, d. h., z. B. um höchstens 1 oder 2 mm kleiner als der Radius der Kreisbahn 15.

In Fig. 1 bis 3 ist die Scheibenwischer-Antriebsvorrichtung während verschiedener Phasen des Wischzykluses wiedergegeben, d. h., wenn die Kurbel 3, 4 entsprechend dem Pfeil 18 dreht und das Wischblatt 12 um einen Winkel pendelt, um das Wischfeld 24 zu überstreichen.

Fig. 1 zeigt dabei die Bereitschaftstellung, d. h., die Stellung zu Beginn des Wischzyklusses, in der bei einem Kraftfahrzeug das Wischblatt 12 an der von der A-Säule entfernten Position des Wischfeldes 24 angeordnet ist. In dieser Position werden das zweite Kurbelteil 4 und die Antriebsstange 7 in Richtung auf eine gemeinsame gestreckte Lage, also in Richtung der Geraden zwischen den Gelenken 5 und 9 gemäß Pfeil 25 belastet, so daß der Führungsbolzen 14 (Fig. 5) gegen die Kreisbahn bzw. Innenwandung 15 gedrückt wird.

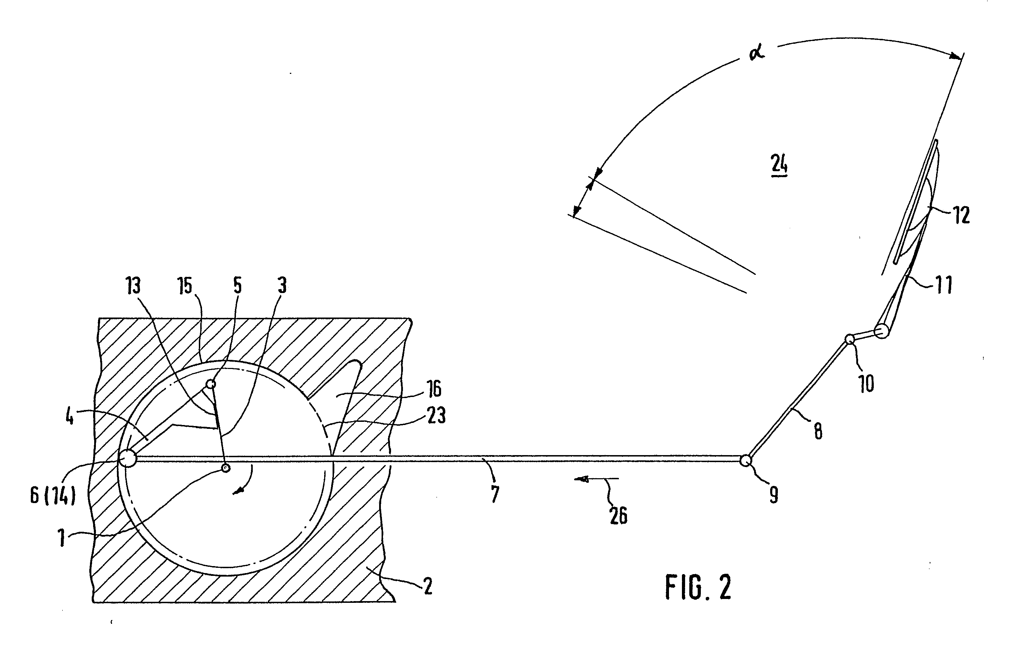

Gemäß Fig. 2 hat sich die Antriebswelle 1 gegenüber der Position nach Fig. 1 um etwa 180° gedreht, d. h., das Wischblatt 12 befindet sich auf der von der Bereitschaftsstellung abgewandten Seite des Wischfeldes 24, bei einem Pkw also in Nachbarschaft der A-Säule. In dieser Stellung wirkt auf das zweite Kurbelteil 4 der Druck der Antriebsstange 7 in Richtung des Pfeiles 26 mit der Folge, daß der Führungsbolzen 14 gegen die Kreisbahn oder kreisförmige Innenwandung 15 gedrückt wird.

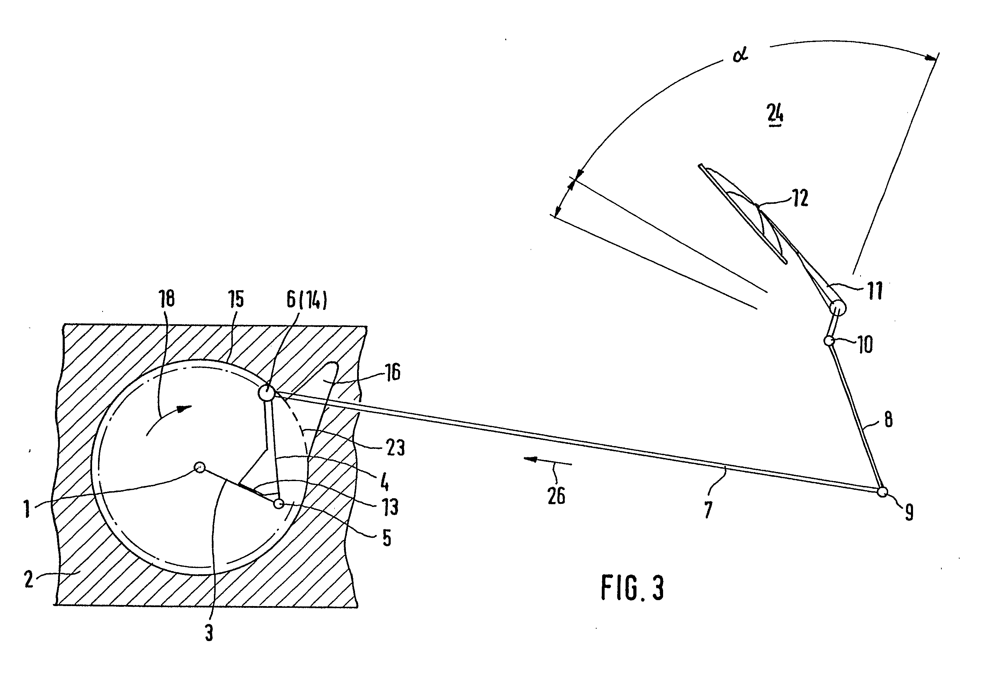

Bei der in Fig. 3 dargestellten Position, in der sich das Wischblatt 12 von der Position gemäß Fig. 2 in die Bereitschaftsstellung gemäß Fig. 1 zurückbewegt, d. h., das Wischblatt 12 mehr als dreiviertel des Wischzykluses zurückgelegt' hat, führt der Druck, den die Antriebsstange 7 in Richtung des Pfeiles 26 auf das zweite Kurbelteil 4 ausübt, dazu, daß das zweite Kurbelteil 4 zum ersten Kurbelteil 3 hin geklappt wird, so daß der plattenförmige Abschnitt oder Anschlag 13 des zweiten Kurbelteils 4 am ersten Kurbelteil 3 anschlägt und sich damit der Führungsbolzen 14 nicht mehr an der Kreisbahn oder kreisförmigen Innenwandung 15 abstützt, d. h., sich um die erwähnten maximal 1 oder 2 mm von der inneren Kreisbahn oder kreisförmigen Innenwandung 15 weg nach innen bewegt. Dadurch überwindet der Führungsbolzen 14 den Kreissektor 23 mit der Aussparung 16 ohne Führung durch die Kreisbahn bzw. die kreisförmige Innenwandung 15, bis er in die Bereitschaftsstellung gemäß Fig. 1 gelangt.

Mit anderen Worten, die taschenförmige Aussparung 16 ist in demjenigen Kreissektor 23 der Kreisbahn 15 angeordnet, den der Führungsbolzen 14 während des Wischvorganges dann durchläuft, wenn sich das Wischblatt 12 von der anderen, also der A-Säule benachbarten Seite des Wischfeldes 24 gemäß Fig. 2 in die Bereitschaftsstellung gemäß Fig. 1 zurückbewegt, also wenn das Wischblatt 12 wenigstens dreiviertel des Wischzykluses zurückgelegt hat, also wenigstens die Hälfte des Weges von der Position gemäß Fig. 2 zur Position gemäß Fig. 1. Bei Durchlauf des Führungsbolzens 14 durch den Kreissektor 23, in dem die Aussparung 16 liegt, stützt sich also das zweite Kurbelteil 4 mit seinem plattenförmigen Anschlag 13 am ersten Kurbelteil 3 ab und nicht über den Führungsbolzen 14 an der Kreisbahn oder kreisförmigen Innenwandung 15 wie in denjenigen Positionen des Führungsbolzens 14 außerhalb des Kreissektors 23.

Soll nun der Scheibenwischer stillgesetzt werden, wird zum vorbereiteten Abstellen des Antriebs die Drehrichtung des Motors und damit der Abtriebswelle 1 und der Kurbel 3, 4 umgekehrt. Dies kann durch einfache Schaltungstechnische Maßnahmen erreicht und durch Betätigung eines Schalters im Arbeitsstromkreis des nicht dargestellten Antriebsmotors ausgelöst werden.

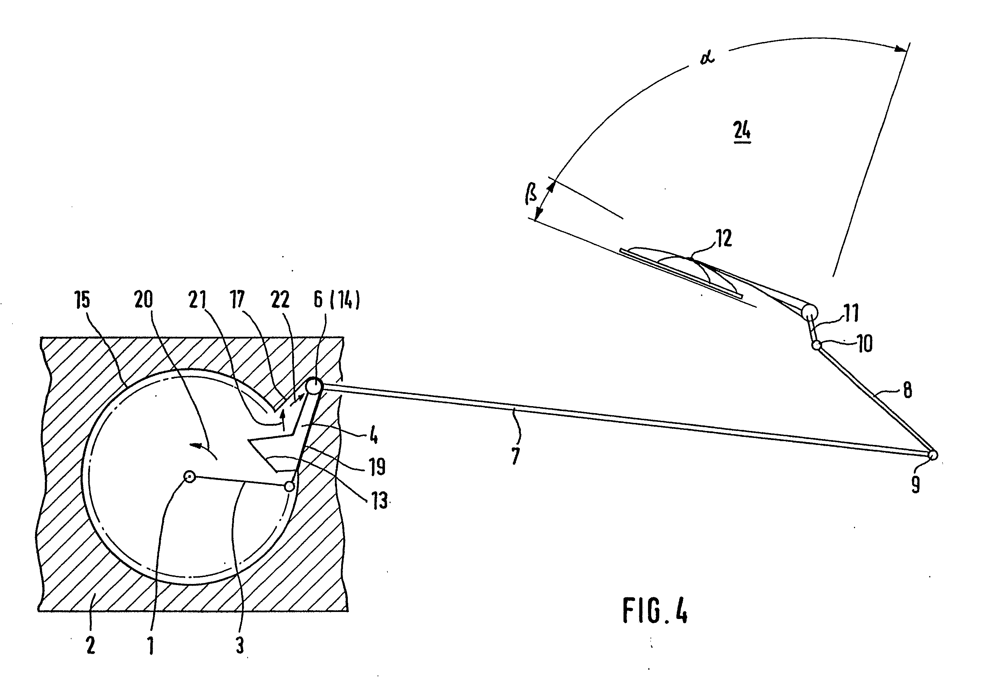

Das erste Kurbelteil 3 läuft dann von der in Fig. 1 gezeigten Bereitschaftsstellung in Richtung des Pfeiles 20 im Gegenuhrzeigersinn. Durch die sich addierenden Reibungskräfte an den einzelnen Gelenken des Scheibenwischers zwischen Antriebsstange 7 und dem Wischblatt 12, also z. B. im Gelenk 9 zwischen der Antriebsstange 7 und der Schwinge 8, an der Wischwelle 10 usw., wird das Gelenk 9 zwischen Antriebsstange 7 und Schwinge 8 gewissermaßen festgehalten, wenn sich die Kurbel 3, 4 in umgekehrter Richtung, also in Richtung des Pfeiles 20 dreht. Dies hat zur Folge, daß der Kurbelzapfen 6, an dem die Antriebsstange 7 angelenkt ist, eine Kreis um das Gelenk 9 zwischen Antriebsstange 7 und Schwinge 8 beschreibt, wie in Fig. 4 durch den Pfeil 21 angedeutet. Damit öffnet sich der Winkel zwischen dem ersten Kurbelteil 3 und dem zweiten Kurbelteil 4, wodurch der Führungsbolzen 14 zur Anlage an der radialen Flanke 17 der Aussparung 16 kommt und dann entsprechend dem Pfeil 22 an der radialen Flanke 17 weiter radial nach außen bis in die Ecke zwischen der radialen Flanke 17 und der tangentialen Flanke 19 der Aussparung 16 gleitet. Damit hat sich der Abstand zwischen der Abtriebswelle bzw. der Drehachse 1 der Kurbel 3, 4 und dem Führungsbolzen 14 vergrößert, d. h., der Führungsbolzen 14 ist radial ausgelenkt worden.

Diese radiale Auslenkung wird von der Antriebsstange 7 auf die Schwinge 8 übertragen, was eine Verschiebung des Wischblattes 12 von der Bereitschaftsstellung gemäß Fig. 1 um einen Winkel β vom Wischfeld 24 weg in die in Fig. 4 gezeigte Parkstellung zur Folge hat.

Wird die Vorrichtung wieder in Betrieb genommen, dreht sich die Abtriebswelle 1 wieder in Richtung des Pfeiles 18 (Fig. 1 bis 3), also im Uhrzeigersinn, wodurch der Führungsbolzen 14 entlang der tangentialen Flanke 19 der Aussparung 16 wieder zur Kreisbahn bzw. kreisförmigen Innenwandung 15 zurückbewegt wird.

**Ansprüche**

1. Antriebsvorrichtung für Scheibenwischer von Fahrzeugen, mit einer aus zwei gelenkig miteinander verbundenen Teilen bestehenden Kurbel, bei der das erste Kurbelteil an einer Abtriebswelle befestigt und das zweite Kurbelteil an der Antriebsstange angelenkt ist, welche ein Wischblatt pendelnd antreibt, und mit einer Führung zum radialen Auslenken eines an dem zweiten Kurbelteil angeordneten Führungsbolzens bei Umkehrung der Drehrichtung der Kurbel zum Überführen des Wischblatts in eine außerhalb des Wischfeldes liegende Parkstellung, dadurch gekennzeichnet, daß die Führung für den Führungsbolzen (14) durch eine konzentrisch um die Drehachse (1) der Kurbel (3, 4) angeordnete Kreisbahn (15) gebildet wird, welche in dem Kreissektor (23) eine Aussparung (16) aufweist, welche der Führungsbolzen (14) während des Wischvorgangs beim Zurückbewegen des Wischblatts (12) in die Bereitschaftsstellung durchläuft, wobei ein Anschlag (13) vorgesehen ist, über den sich das zweite Kurbelteil (4) am ersten Kurbelteil (3) bei Durchlauf des Führungsbolzens (14) durch den Kreissektor (23) mit der Aussparung (16) abstützt.

2. Vorrichtung nach Anspruch 1, dadurch gekennzeichnet, daß die Aussparung (16) eine sich im wesentlichen radial erstreckende Flanke (17) und eine sich im wesentlichen tangential erstreckende Flanke (19) aufweist.

3. Vorrichtung nach Anspruch 1 oder 2, dadurch gekennzeichnet, daß die Kreisbahn (15) durch die Innenwandung einer kreisförmigen Ausnehmung in der Konsole (2) oder in einem an der Konsole (2) befestigten Bauteil gebildet wird.

4. Vorrichtung nach einem der vorstehenden Ansprüche, dadurch gekennzeichnet, daß der Führungsbolzen (14) am Kurbelzapfen (6) angeordnet ist, an dem die Antriebsstange (7) angelenkt ist.

5. Vorrichtung nach einem der vorstehenden Ansprüche, dadurch gekennzeichnet, daß der Anschlag (13) durch einen plattenförmigen Abschnitt am ersten und/oder zweiten Kurbelteil (3, 4) gebildet wird.

6. Vorrichtung nach einem der vorstehenden Ansprüche, dadurch gekennzeichnet, daß das erste Kurbelteil (3) an seinem radial inneren Abschnitt zur Konsole (2) hin gekröpft ist.

FIG. 1

FIG. 2

FIG. 3

FIG. 4

FIG. 5